# EUROPEAN PATENT APPLICATION

(11) **EP 4 317 307 A1**
(43) Date of publication of application: **07.02.2024**
(21) Application number: 22781277.3
(22) Date of filing: 31.03.2022
(51) Int. Cl.: C08L 27/12, C08F 214/26, C08J 3/12, C08J 3/20

(54) **FLUORORESIN COMPOSITION AND MOLDED OBJECT**

(30) Priority: 31.03.2021 JP 2021060837
(71) Applicant: DAIKIN INDUSTRIES, LTD., Osaka-Shi, Osaka 530-0001 (JP)
(72) Inventor: MUKAE, Hirofumi, Osaka-Shi, Osaka 530-0001 (JP); KISHIKAWA, Yosuke, Osaka-Shi, Osaka 530-0001 (JP); YAMANAKA, Taku, Osaka-Shi, Osaka 530-0001 (JP); KATO, Taketo, Osaka-Shi, Osaka 530-0001 (JP); SAKAKURA, Atsushi, Osaka-Shi, Osaka 530-0001 (JP); ITOH, Ryuo, Osaka-Shi, Osaka 530-0001 (JP); KUBOTA, Hiroki, Osaka-Shi, Osaka 530-0001 (JP); NAKAUE, Ayane, Osaka-Shi, Osaka 530-0001 (JP)
(74) Representative: Hoffmann Eitle
(86) International application number: PCT/JP2022/016738
(87) International publication number: WO 2022/211067

(57) **Abstract**

Provided is a fluororesin composition having excellent tensile properties while containing a fluororesin having a history of being heated to the melting point thereof or higher, and a molded article obtainable from the fluororesin composition. The disclosure provides a non-melt-flowable fluororesin composition containing: a non-melt-flowable fluororesin A having a history of being heated to a melting point thereof or higher; and a melt-flowable fluororesin B.

## Description

### TECHNICAL FIELD

The disclosure relates to fluororesin compositions and molded articles.

### BACKGROUND ART

Polytetrafluoroethylene (PTFE) having a history of being heated to the melting point thereof or higher for processing such as molding fails to provide sufficient physical properties when it is directly reused as molding material, which causes partial recycling of such PTFE for the purpose of molding.

Patent Literature 1 and Patent Literature 2 disclose techniques relating to recycling of PTFE pulverized after firing or of heated PTFE.

### CITATION LIST

### - Patent Literature

Patent Literature 1: WO 2019/244433
Patent Literature 2: JP 2006-70233 A

### SUMMARY OF INVENTION

### - Technical Problem

The disclosure aims to provide a fluororesin composition having excellent tensile properties while containing a fluororesin having a history of being heated to the melting point thereof or higher and a molded article obtainable from the fluororesin composition.

### - Solution to Problem

The disclosure provides a non-melt-flowable fluororesin composition containing: a non-melt-flowable fluororesin A having a history of being heated to a melting point thereof or higher; and a melt-flowable fluororesin B.

The fluororesin A is preferably polytetrafluoroethylene.

The fluororesin B preferably has a MFR of 0.25 g/10 min or higher.

The fluororesin B is preferably a fluororesin having a melting point of 320°C or lower.

The fluororesin composition preferably further contains a non-melt-flowable fluororesin C including a portion having no history of being heated to a melting point thereof or higher.

The fluororesin composition preferably has at least one melting point within a temperature range lower than 333°C and at least one melting point within a temperature range from 333°C to 360°C.

Preferably, the fluororesin composition contains a tetrafluoroethylene unit and a modifying monomer unit based on a modifying monomer copolymerizable with tetrafluoroethylene, the modifying monomer unit being present in an amount of 1.0% by mass or less of all polymerized units.

The fluororesin composition preferably has an average secondary particle size of 5 to 700 µm.

Preferably, a low molecular weight fluorine-containing compound is contained in an amount of 1 ppm by mass or less of the fluororesin composition.

The fluororesin composition is preferably in the form of powder.

The fluororesin composition is preferably in the form of a powder for compression molding.

The fluororesin composition preferably has a tensile strength at break of 10 MPa or higher.

The fluororesin composition preferably has a tensile strain at break of 150% or higher.

The disclosure also provides a molded article obtainable by compression-molding and firing the fluororesin composition.

### - Advantageous Effects of Invention

The disclosure can provide a fluororesin composition having excellent tensile properties while containing a fluororesin having a history of being heated to the melting point thereof or higher and a molded article obtainable from the fluororesin composition.

### DESCRIPTION OF EMBODIMENTS

The disclosure is described in detail below.

The disclosure provides a non-melt-flowable fluororesin composition containing: a non-melt-flowable fluororesin A having a history of being heated to a melting point thereof or higher; and a melt-flowable fluororesin B.

The fluororesin composition of the disclosure contains a melt-flowable fluororesin B and therefore has excellent tensile properties (e.g., tensile strength at break and tensile strain at break) while containing a fluororesin A having a history of being heated to the melting point thereof or higher. This effect is seemingly achieved by the fluororesin B filling interfaces between particles of the fluororesin A during molding.

The fluororesin A and the fluororesin B in the fluororesin composition of the disclosure may be distinguished, for example, by a method including placing the fluororesin composition on a hot stage and microscopically observing the fluororesin composition while increasing the temperature at a rate of 5°C/min to check whether the particles maintain the shape, thereby determining the particles are of the fluororesin A or the fluororesin B.

The fluororesin A has a history of being heated to the melting point thereof or higher. The heating may be heating for molding or heat treatment, for example.

The fluororesin A preferably has a melting point of not lower than 100°C but lower than 333°C, more preferably lower than 332°C, still more preferably lower than 331°C.

The lower limit thereof is more preferably 140°C, still more preferably not lower than 180°C, although not limited thereto.

The fluororesin A preferably has at least one melting point within a temperature range lower than 333°C. The temperature range lower than 333°C is more preferably lower than 332°C, still more preferably lower than 331°C, while preferably 100°C or higher, more preferably 140°C or higher, still more preferably 180°C or higher.

A melting point within the above range indicates that the resin has a history of being heated to the melting point thereof or higher.

The fluororesin A may also have a melting point within a temperature range of 333°C or higher.

The melting point of a fluororesin herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). In the case where one melting peak includes two or more local minimums, each minimum is defined as a melting point.

The fluororesin A is non-melt-flowable.

The term "non-melt-flowable" herein means that the melt flow rate (MFR) is lower than 0.25 g/10 min, preferably lower than 0.10 g/10 min, more preferably 0.05 g/10 min or lower.

The MFR herein is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE). For PTFE, the MFR is a value obtained by measurement under the same measurement conditions as for PFA.

Alternatively, a fluororesin may also be determined as being non-melt-flowable in the case where the thickness of a molded article prepared by compression-molding the fluororesin to provide a preformed article (non-fired molded article) and heating this preformed article at the melting point of the fluororesin or higher for one hour or longer is smaller than the thickness before heating by less than 20% or is greater than the thickness before heating.

The fluororesin A is preferably polytetrafluoroethylene (PTFE). The PTFE may be a high molecular weight PTFE.

The PTFE as a fluororesin A may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The modifying monomer unit herein means a moiety that is part of the molecular structure of PTFE and is derived from a modifying monomer.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf (A)

wherein Rf is a perfluoroorganic group. The term "perfluoroorganic group" herein means an organic group in which all hydrogen atoms bonded to any carbon atom are replaced by fluorine atoms. The perfluoroorganic group may contain an ether oxygen.

Examples of the perfluorovinyl ether include a perfluoro(alkyl vinyl ether) (PAVE) represented by the formula (A) wherein Rf is a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:
those represented by the formula (A) wherein Rf is a C4-C9 perfluoro(alkoxy alkyl) group;
those represented by the formula (A) wherein Rf is a group represented by the following formula: 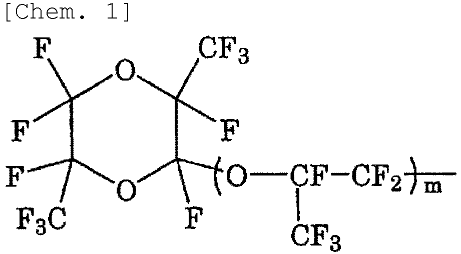 wherein m is 0 or an integer of 1 to 4; and
those represented by the formula (A) wherein Rf is a group represented by the following formula: 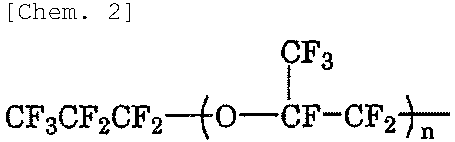 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE as a fluororesin A preferably has a standard specific gravity (SSG) of 2.280 or lower, more preferably 2.10 or lower, while preferably 1.50 or higher, more preferably 1.60 or higher. The SSG is determined by the immersion method in conformity with ASTM D792 using a sample molded in conformity with ASTM D4895-89.

The PTFE as a fluororesin A commonly has non-melt secondary processibility. The non-melt secondary processibility means a property of a polymer such that the melt flow rate cannot be measured at a temperature higher than the melting point in conformity with ASTM D1238 and D2116, in other words, a property of a polymer such that it does not easily flow even within a melting point range.

The PTFE (high molecular weight PTFE) as a fluororesin A preferably has a melting point of 310°C or higher, more preferably 320°C or higher, while preferably lower than 333°C. The PTFE may also have a melting point within a temperature range of 333°C or higher.

The fluororesin composition of the disclosure may contain particles of the fluororesin A. The particles of the fluororesin A may be secondary particles of the fluororesin A.

The particles of the fluororesin A preferably have an average secondary particle size of 1 to 200 um. The average secondary particle size is more preferably 5 um or greater, still more preferably 10 um or greater, while more preferably 150 um or smaller, still more preferably 100 um or smaller, further preferably 70 um or smaller, particularly preferably 50 um or smaller, most preferably 30 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A preferably have a D90 of 10 um or greater, more preferably 30 um or greater, still more preferably 50 um or greater, while preferably 600 um or smaller, more preferably 500 um or smaller, still more preferably 400 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A are obtainable, for example, by compression-molding and firing a non-melt-flowable fluororesin having no history of being heated to the melting point thereof or higher and then pulverizing chips of the resulting molded article. The pulverization may be performed using a pulverizer, for example. The pulverization may include coarse pulverization and subsequent fine pulverization. The compression-molded article may have any shape. The firing may be performed at any temperature that is not lower than the melting point of the fluororesin. Any pulverizer may be used that can pulverize (preferably, finely pulverize) the chips. Examples thereof include an air jet mill, a hammer mill, a force mill, a millstone pulverizer, and a freeze pulverizer.

The particles of the fluororesin A are also obtainable, for example, by heating a powder of a non-melt-flowable fluororesin up to the melting point thereof or higher without compression molding, with the fluororesin having no history of being heated to the melting point thereof or higher, and then pulverizing the product using a pulverizer. The pulverizer is as described above.

The fluororesin B is melt-flowable.

The term "melt-flowable" herein means that the MFR is 0.25 g/10 min or higher, preferably 0.50 g/10 min or higher, more preferably 1.00 g/10 min or higher. The MFR may be 100 g/10 min or lower and is preferably 80 g/10 min or lower.

Alternatively, based on the thickness of a preformed article (non-fired molded article) prepared by compression-molding a fluororesin and the thickness thereof after heating at the melting point of the fluororesin or higher for one hour or longer, the fluororesin may also be determined as being melt-flowable in the case where the thickness after heating is smaller than the thickness before heating by 20% or more.

The fluororesin B preferably has no history of being heated to the melting point thereof or higher.

The fluororesin B preferably has a melting point of 100°C to 340°C. The melting point is more preferably 140°C or higher, still more preferably 160°C or higher, while more preferably 336°C or lower, still more preferably 333°C or lower, further preferably 332°C or lower, even more preferably 331°C or lower, particularly preferably 330°C or lower.

The melting point of the fluororesin B can be measured by the aforementioned method. In the case where the amount of the fluororesin B is as small as not more than 5% by mass of the sum of the fluororesin A and the fluororesin B, for example, the above method may fail to detect the melting point. In this case, the melting peak of the fluororesin B may be successfully detected by maintaining the fluororesin B at a temperature lower than the melting point thereof (preferably, a temperature lower than the melting point by 10°C or more) for 10 minutes, and then again increasing the temperature at a rate of 10°C/min. This method may be used to increase the temperature.

The fluororesin B preferably includes at least one selected from the group consisting of a fluororesin having a melting point of 320°C or lower and low molecular weight polytetrafluoroethylene (low molecular weight PTFE), and is more preferably a fluororesin having a melting point of 320°C or lower.

The fluororesin B is preferably a perfluoro resin.

Examples of the fluororesin having a melting point of 320°C or lower include a tetrafluoroethylene (TFE)/perfluoro(alkyl vinyl ether) (PAVE) or perfluoro(alkyl allyl ether) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, an Et/CTFE copolymer, polyvinyl fluoride (PVF), polyvinylidene fluoride (PVdF), a vinylidene fluoride (VdF)/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, and a VdF/PAVE/TFE copolymer. Preferred is at least one selected from the group consisting of PFA, FEP, and ETFE, more preferred is at least one selected from the group consisting of PFA and FEP, and still more preferred is PFA.

The PFA contains a TFE unit and a PAVE unit or perfluoro(alkyl allyl ether) unit. Examples of the PAVE include monomers represented by the formula (A) wherein Rf is a C1-C10 perfluoroalkyl group. Examples of the perfluoro(alkyl allyl ether) include monomers represented by the formula (B) wherein Rf¹ is a C1-C10 perfluoroalkyl group.

The PFA is preferably, but not limited to, a copolymer in which the mole ratio of the TFE unit to the PAVE unit or perfluoro(alkyl allyl ether) unit ((TFE unit)/(PAVE unit or perfluoro(alkyl allyl ether) unit)) is not smaller than 70/30 but smaller than 99/1. The mole ratio is more preferably 70/30 or higher and 98.9/1.1 or lower, still more preferably 80/20 or higher and 98.9/1.1 or lower. The PFA is also preferably a copolymer containing a polymerized unit derived from a monomer copolymerizable with TFE and PAVE or perfluoro(alkyl allyl ether) in an amount of 0.1 to 10 mol% (i.e., the TFE unit and the PAVE unit or perfluoro(alkyl allyl ether) unit represent 90 to 99.9 mol% in total), more preferably 0.1 to 5 mol%, particularly preferably 0.2 to 4 mol%.

Examples of the monomer copolymerizable with TFE and PAVE or perfluoro(alkyl allyl ether) include: HFP; a vinyl monomer represented by the formula (I): CZ¹Z²=CZ³(CF₂)ₙZ⁴ (wherein Z¹, Z², and Z³ are the same as or different from each other and are each a hydrogen atom or a fluorine atom; Z⁴ is a hydrogen atom, a fluorine atom, or a chlorine atom; and n is an integer of 2 to 10); an alkyl perfluorovinyl ether derivative represented by the formula (II): CF₂=CF-OCH₂-Rf² (wherein Rf² is a C1-C5 perfluoroalkyl group); and an allyl ether monomer represented by the formula (III): CZ⁵Z⁶=CZ⁷-CZ⁸Z⁹-O-Rf³ (wherein Z⁵, Z⁶, and Z⁷ are the same as or different from each other and are each a hydrogen atom, a chlorine atom, or a fluorine atom; Z⁸ and Z⁹ are each a hydrogen atom or a fluorine atom; and Rf³ is a C1-C5 perfluoroalkyl group). Preferred examples of the allyl ether monomer include CH₂=CFCF₂-O-Rf³, CF₂=CFCH₂-O-Rf³, and CH₂=CHCF₂-O-Rf³ wherein Rf³ is defined as in the formula (III) .

Examples of the monomer copolymerizable with TFE and PAVE or perfluoro(alkyl allyl ether) also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA preferably has a melting point of 180°C to 320°C, more preferably 230°C to 320°C, still more preferably 280°C to 320°C.

The PFA preferably has a MFR of 0.25 g/10 min or higher and 100 g/10 min or lower, more preferably 0.5 g/10 min or higher, still more preferably 1.0 g/10 min or higher, while more preferably 90 g/10 min or lower, still more preferably 80 g/10 min or lower.

The MFR of the PFA is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 372°C and a load of 5 kg.

The FEP is preferably, but is not limited to, a copolymer in which the mole ratio of the TFE unit to the HFP unit ((TFE unit)/(HFP unit)) is not smaller than 70/30 but smaller than 99/1. The mole ratio is more preferably 70/30 or higher and 98.9/1.1 or lower, still more preferably 80/20 or higher and 98.9/1.1 or lower. The FEP is also preferably a copolymer containing a polymerized unit derived from a monomer copolymerizable with TFE and HFP in an amount of 0.1 to 10 mol% (i.e., the TFE unit and the HFP unit represent 90 to 99.9 mol% in total), more preferably 0.1 to 5 mol%, particularly preferably 0.2 to 4 mol%.

Examples of the monomer copolymerizable with TFE and HFP include PAVE, a monomer represented by the formula (III), and an alkyl perfluorovinyl ether derivative represented by the formula (II).

Examples of the monomer copolymerizable with TFE and HFP also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The FEP preferably has a melting point of 150°C to 320°C, more preferably 200°C to 320°C, still more preferably 240°C to 320°C.

The FEP preferably has a MFR of 0.25 g/10 min or higher and 100 g/10 min or lower, more preferably 0.5 g/10 min or higher, still more preferably 1.0 g/10 min or higher, while more preferably 80 g/10 min or lower, still more preferably 60 g/10 min or lower.

The MFR of the FEP is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 372°C and a load of 5 kg.

The ETFE is preferably a copolymer in which the mole ratio of the TFE unit to the ethylene unit ((TFE unit)/(ethylene unit)) is 20/80 or higher and 90/10 or lower. The mole ratio is more preferably 37/63 or higher and 85/15 or lower, still more preferably 38/62 or higher and 80/20 or lower. The ETFE may be a copolymer containing TFE, ethylene, and a monomer copolymerizable with TFE and ethylene. Examples of the copolymerizable monomer include monomers represented by any of the formulas: CH₂=CX¹Rf⁴, CF₂=CFRf⁴, CF₂=CFORf⁴, and CH₂=C(Rf⁴)₂ (wherein X¹ is a hydrogen atom or a fluorine atom; and Rf⁴ is a fluoroalkyl group optionally containing an ether bond) and monomers represented by the formula (III). Preferred among these are fluorine-containing vinyl monomers represented by any of CF₂=CFRf⁴, CF₂=CFORf⁴, and CH₂=CX⁴Rf⁴ and monomers represented by the formula (III). More preferred are HFP, a perfluoro(alkyl vinyl ether) represented by CF₂=CF-ORf⁵ (wherein Rf⁵ is a C1-C5 perfluoroalkyl group), a perfluoro(alkyl allyl ether) represented by CF₂=CF-CF₂-O-Rf³ (wherein Rf³ is a C1-C5 perfluoroalkyl group), and a fluorine-containing vinyl monomer represented by CH₂=CX¹Rf⁴ wherein Rf⁴ is a C1-C8 fluoroalkyl group. The monomer copolymerizable with TFE and ethylene may be an aliphatic unsaturated carboxylic acid such as itaconic acid or itaconic anhydride. The monomer copolymerizable with TFE and ethylene is preferably in an amount of 0.1 to 10 mol%, more preferably 0.1 to 5 mol%, particularly preferably 0.2 to 4 mol% of the fluorine-containing polymer.

The ETFE preferably has a melting point of 140°C to 320°C, more preferably 160°C to 320°C, still more preferably 195°C to 320°C.

The ETFE preferably has a MFR of 0.25 g/10 min or higher and 100 g/10 min or lower, more preferably 0.5 g/10 min or higher, still more preferably 1.0 g/10 min or higher, while more preferably 90 g/10 min or lower, still more preferably 80 g/10 min or lower.

The MFR of the ETFE is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 297°C and a load of 5 kg.

The low molecular weight PTFE preferably has a melt viscosity (complex viscosity) at 380°C of 1.0 × 10¹ to 1.0 × 10⁷ Pa·s.

The melt viscosity is more preferably 1.0 × 10² Pa·s or higher, still more preferably 1.5 × 10³ Pa·s or higher, particularly preferably 7.0 × 10³ Pa·s or higher, while more preferably 7.0 × 10⁵ Pa·s or lower, still more preferably 3.0 × 10⁵ Pa·s or lower, particularly preferably 1.0 × 10⁵ Pa·s or lower.

The "low molecular weight PTFE" herein means PTFE having a melt viscosity within the above range.

The melt viscosity is a value determined by heating a 2-g sample at 380°C for five minutes in advance and then keeping the sample at this temperature under a load of 0.7 MPa using a flow tester (available from Shimadzu Corp.) and a 2ϕ-8 L die in conformity with ASTM D1238.

The low molecular weight PTFE preferably has a MFR, which is obtained as the mass (g/10 min) of a polymer flowing out of a nozzle (inner diameter: 2.095 mm, length: 8 mm) per 10 minutes at a temperature of 372°C and a load of 5 kg, of 0.25 g/10 min or higher, more preferably 0.10 g/10 min or higher, still more preferably 0.05 g/10 min or higher. The MFR is also preferably 50 g/10 min or lower, more preferably 30 g/10 min or lower, still more preferably 10 g/10 min or lower.

The low molecular weight PTFE preferably has a melting point of 320°C to 340°C. The melting point is more preferably 324°C or higher, while more preferably 336°C or lower, still more preferably 333°C or lower, further preferably 332°C or lower, even more preferably 331°C or lower, particularly preferably 330°C or lower.

The low molecular weight PTFE may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer include the monomers described above for the PTFE (high molecular weight PTFE) as a non-melt flowable fluororesin.

The amounts of the respective monomer units in the aforementioned polymer can be calculated by appropriate combination of NMR, FT-IR, elemental analysis, and X-ray fluorescence analysis in accordance with the types of the monomers.

The fluororesin B may be produced by a known polymerization technique such as emulsion polymerization, suspension polymerization, or solution polymerization.

The fluororesin composition of the disclosure may contain particles of the fluororesin B. The particles of the fluororesin B may be primary particles of the fluororesin B or secondary particles thereof.

The particles of the fluororesin B in the form of primary particles (aqueous dispersion) preferably have an average primary particle size of 500 nm or smaller. The average primary particle size is more preferably 400 nm or smaller, still more preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

The particles of the fluororesin B in the form of secondary particles (powder) preferably have an average secondary particle size of 100 um or smaller. The average secondary particle size is more preferably 70 um or smaller, still more preferably 50 um or smaller, particularly preferably 40 um or smaller. The average secondary particle size is also preferably 1 um or greater, more preferably 5 um or greater, still more preferably 10 um or greater, further preferably 20 um or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition of the disclosure preferably further contains a non-melt-flowable fluororesin C including a portion having no history of being heated to the melting point thereof or higher. The fluororesin composition of the disclosure has excellent tensile properties without containing a fluororesin C, but the presence of a fluororesin C can lead to much improved tensile properties.

The fluororesin composition of the disclosure preferably contains fluororesins A and B and optionally a fluororesin C.

The fluororesin C includes a portion having no history of being heated to the melting point thereof or higher.

The fluororesin C preferably has at least one melting point within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the presence of a portion having no history of being heated to the melting point or higher.

In addition to the above melting point, the fluororesin C may also have a melting point within a temperature range lower than 333°C.

In the case of further containing a fluororesin C, the fluororesin composition of the disclosure preferably has at least one melting point within a temperature range lower than 333°C and at least one melting point within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to the melting point thereof or higher and a non-melt-flowable fluororesin C including a portion having no history of being heated to the melting point thereof or higher.

The fluororesin C is non-melt-flowable. The term "melt-flowable" is defined as described above.

The fluororesin C is preferably PTFE. The PTFE may be a high molecular weight PTFE.

Preferably, the PTFE (high molecular weight PTFE) as a fluororesin C has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin C preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to the melting point thereof or higher, the term "high molecular weight" means that the standard specific gravity falls within the above range.

The PTFE as a fluororesin C commonly has non-melt secondary processibility. The term "non-melt secondary processibility" is defined as described above.

The PTFE as a fluororesin C may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin C include those described as examples for the PTFE (high molecular weight PTFE) as a fluororesin A.

The fluororesin composition of the disclosure may contain particles of the fluororesin C. The particles of the fluororesin C may be primary particles of the fluororesin C or secondary particles thereof.

The particles of the fluororesin C in the form of primary particles (aqueous dispersion) preferably have an average primary particle size of 500 nm or smaller. The average primary particle size is more preferably 400 nm or smaller, still more preferably 350 nm or smaller, particularly preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

The particles of the fluororesin C in the form of secondary particles (powder) preferably have an average secondary particle size of 700 um or smaller. The average secondary particle size is more preferably 500 um or smaller, still more preferably 100 um or smaller, further preferably 60 um or smaller, particularly preferably 50 um or smaller. The average secondary particle size is also preferably 1 um or greater, more preferably 5 um or greater, still more preferably 10 um or greater, further preferably 20 um or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In an embodiment of the fluororesin composition of the disclosure, the particles of the fluororesin C in the form of primary particles preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The average aspect ratio may be 1.0 or higher.

The average aspect ratio is determined as follows. Specifically, the fluororesin composition is observed using a scanning electron microscope (SEM) and 100 or more primary particles randomly selected are imaged. The ratio of the major and minor axes of each particle is then obtained and the average thereof is defined as the average aspect ratio.

In an embodiment of the fluororesin composition of the disclosure where the particles of the fluororesin C are in the form of primary particles, the particles of the fluororesin C having an aspect ratio of 2.5 or higher are preferably in a proportion of 0.5% or more, more preferably 1.0% or more, still more preferably 1.5% or more, particularly preferably 2.0% or more of all particles of the fluororesin C. The proportion is also preferably 20% or less, more preferably 15% or less, still more preferably 10% or less.

The proportion is determined as follows. Specifically, the fluororesin composition is observed using a scanning electron microscope (SEM) and 100 or more primary particles randomly selected are imaged. The aspect ratio of each particle is then calculated and the proportion of the particles of interest is defined relative to the total number of the particles selected.

In order to achieve more improved tensile properties, the amount of the fluororesin A in the fluororesin composition of the disclosure is preferably 10 to 99.5% by mass of the fluororesin composition. The amount is more preferably 30% by mass or more, still more preferably 40% by mass or more, particularly preferably 50% by mass or more, while more preferably 99% by mass or less, still more preferably 95% by mass or less, further preferably 90% by mass or less, even more preferably 85% by mass or less, particularly preferably 80% by mass or less.

In order to achieve more improved tensile properties, the amount of the fluororesin B in the fluororesin composition of the disclosure is preferably 0.5 to 30% by mass of the fluororesin composition. The amount is more preferably 1.0% by mass or more, still more preferably 3% by mass or more, further preferably 5% by mass or more, particularly preferably 7% by mass or more, while more preferably 25% by mass or less, still more preferably 20% by mass or less, further preferably 15% by mass or less, particularly preferably 10% by mass or less.

In order to achieve more improved tensile properties, the amount of the fluororesin C in the fluororesin composition of the disclosure is preferably 0 to 80% by mass of the fluororesin composition. The amount is more preferably 1% by mass or more, still more preferably 10% by mass or more, further preferably 20% by mass or more, even more preferably 30% by mass or more, particularly preferably 40% by mass or more, while more preferably 75% by mass or less, still more preferably 70% by mass or less, further preferably 65% by mass or less, even more preferably 60% by mass or less, particularly preferably 50% by mass or less.

The total amount of the fluororesins A to C in the fluororesin composition of the disclosure is preferably 80% by mass or more, more preferably 85% by mass or more, still more preferably 90% by mass or more, further preferably 95% by mass or more, particularly preferably 98% by mass or more of the fluororesin composition.

The fluororesin composition of the disclosure is non-melt-flowable.

The fluororesin composition of the disclosure may have a MFR of lower than 0.25 g/10 min, preferably lower than 0.10 g/10 min, more preferably 0.05 g/10 min or lower.

Alternatively, based on the thickness of a preformed article (non-fired molded article) prepared by compression-molding the fluororesin composition of the disclosure and the thickness thereof after heating at the melting point of the fluororesin composition or higher for one hour or longer, the thickness after heating is preferably smaller than the thickness before heating by less than 20°; or the thickness after heating is preferably greater than the thickness before heating because these cases means that the fluororesin composition is non-melt-flowable.

Preferably, the fluororesin composition of the disclosure contains a TFE unit and a modifying monomer unit based on a modifying monomer copolymerizable with TFE and the modifying monomer unit is present in an amount of 1.0% by mass or less of all polymerized units. The TFE unit is preferably present in an amount of 99.0% by mass or more.

The lower limit of the amount of the modifying monomer unit in the fluororesin composition of the disclosure may be 0% by mass, and is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The amount of the modifying monomer unit can be calculated by appropriate combination of NMR, FT-IR, elemental analysis, and X-ray fluorescence analysis in accordance with the type of the monomer. In the case where the composition of materials is known, the amount may be calculated from the composition of materials.

The fluororesin composition of the disclosure may be in any form, and is preferably in the form of powder.

The fluororesin composition of the disclosure preferably has an average secondary particle size of 5 to 700 um. The average secondary particle size is more preferably 10 um or greater, still more preferably 20 um or greater, while more preferably 600 um or smaller, more preferably 500 um or smaller, still more preferably 400 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition of the disclosure preferably has a D90 of 10 um or greater, more preferably 30 um or greater, still more preferably 50 um or greater, while preferably 600 um or smaller, more preferably 500 um or smaller, still more preferably 400 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve more improved tensile properties, the fluororesin composition of the disclosure preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include C4 or higher fluorine-containing carboxylic acids and salts thereof and C4 or higher fluorine-containing sulfonic acid and salts thereof. Each of these may contain an ether bond (-O-).

The low molecular weight fluorine-containing compound may be, for example, a fluorine-containing anion surfactant. For example, the fluorine-containing anion surfactant may be a surfactant which contains a fluorine atom and in which the portions excluding the anionic group have a total carbon number of 20 or less.

The fluorine-containing surfactant may also be a surfactant which contains fluorine and in which the anionic portion has a molecular weight of 800 or lower.

The "anionic portion" means a portion of the fluorine-containing surfactant excluding the cation. For example, in the case of F(CF₂)ₙ₁COOM represented by the formula (I) to be described later, the portion "F(CF₂)ₙ₁COO" corresponds to the anionic portion.

The low molecular weight fluorine-containing compound may also be a fluorine-containing surfactant having a LogPOW of 3.5 or lower. The LogPOW is a partition coefficient of 1-octanol and water, and is represented by LogP wherein P is the ratio (concentration of fluorine-containing surfactant in octanol)/(concentration of fluorine-containing surfactant in water) after phase separation of an octanol/water (1:1) liquid mixture containing the fluorine-containing surfactant.

The LogPOW is calculated as follows. Specifically, HPLC is performed on standard substances (heptanoic acid, octanoic acid, nonanoic acid, and decanoic acid) having known octanol/water partition coefficients under the following conditions, i.e., column: TOSOH ODS-120T column (ϕ4.6 mm × 250 mm, available from Tosoh corp.); eluent: acetonitrile/0.6% by mass HClO₄ in water = 1/1 (vol/vol%); flow rate: 1.0 mL/min; amount of sample: 300 µL, column temperature: 40°C, and detection light: UV 210 nm. A calibration curve is then drawn using the respective elution times and known octanol/water partition coefficients. Based on this calibration curve, the LogPOW is calculated from the elution time of a sample liquid in HPLC.

Specific examples of the fluorine-containing surfactant include those disclosed in US 2007/0015864 A1, US 2007/0015865 A1, US 2007/0015866 A1, US 2007/0276103 A1, US 2007/0117914 A1, US 2007/142541 A1, US 2008/0015319 A1, US 3250808 A, US 3271341 A, JP 2003-119204 A, WO 2005/042593 A1, WO 2008/060461 A1, WO 2007/046377 A1, JP 2007-119526 A, WO 2007/046482 A1, WO 2007/046345 A1, US 2014/0228531 A1, WO 2013/189824 A1, and WO 2013/189826 A1.

Examples of the fluorine-containing anion surfactant include compounds represented by the following formula (N⁰)_{:}

Xⁿ⁰-Rfⁿ⁰-Y⁰ (N⁰)

wherein Xⁿ⁰ is H, Cl, or/and F; Rfⁿ⁰ is a C3-C20 linear, branched, or cyclic alkylene group in which any or all of H atoms are replaced by F atoms, where the alkylene group optionally contains at least one ether bond and any H is optionally replaced by Cl; and Y° is an anionic group.

The anionic group for Y° may be -COOM, -SO₂M, or - SO₃M, and may be -COOM or -SO₃M.

M is H, a metal atom, NR⁷₄, imidazolium optionally having a substituent, pyridinium optionally having a substituent, or phosphonium optionally having a substituent, where R⁷ is H or an organic group.

Examples of the metal atom include alkali metals (Group 1) and alkaline earth metals (Group 2), such as Na, K, and Li.

R⁷ may be H or a C1-C10 organic group, or may be H or a C1-C4 organic group, or may be H or a C1-C4 alkyl group.

M may be H, a metal atom, or NR⁷₄, or may be H, an alkali metal (Group 1), an alkaline earth metal (Group 2), or NR⁷₄, or may be H, Na, K, Li, or NH₄.

Rfⁿ⁰ may be a group in which 50% or more of H atoms are replaced by fluorine atoms.

Examples of the compounds represented by the formula (N⁰) include
compounds represented by the following formula (N¹):

   Xⁿ⁰-(CF₂)ₘ₁-Y⁰ (N¹)

   wherein Xⁿ⁰ is H, Cl, or F; m1 is an integer of 3 to 15; and Y° is defined as described above;
compounds represented by the following formula (N²):

   Rfⁿ¹-O-(CF(CF₃)CF₂O)ₘ₂CFXⁿ¹-Y⁰ (N²)

   wherein Rfⁿ¹ is a C1-C5 perfluoroalkyl group; m2 is an integer of 0 to 3; Xⁿ¹ is F or CF₃; and Y⁰ is defined as described above;
compounds represented by the following formula (N³):

   Rfⁿ²(CH₂)ₘ₃-(Rfⁿ³)_{q}-Y⁰ (N³)

   wherein Rfⁿ² is a C1-C13 partially or completely fluorinated alkyl group optionally containing an ether bond and/or a chlorine atom; m3 is an integer of 1 to 3; Rfⁿ³ is a C1-C3 linear or branched perfluoroalkylene group; q is 0 or 1; and Y° is defined as described above;
compounds represented by the following formula (N⁴):

   Rfⁿ⁴-O-(CYⁿ¹Yⁿ²)ₚCF₂-Y⁰ (N⁴)

   wherein Rfⁿ⁴ is a C1-C12 linear or branched, partially or completely fluorinated alkyl group optionally containing an ether bond; Yⁿ¹ and Yⁿ² are the same as or different from each other and are each H or F; p is 0 or 1; and Y° is defined as described above; and
compounds represented by the following formula (N⁵): 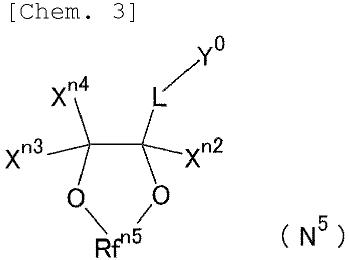 wherein Xⁿ², Xⁿ³, and Xⁿ⁴ are the same as or different from each other and are each H, F, or a C1-C6 linear or branched, partially or completely fluorinated alkyl group optionally containing an ether bond; Rfⁿ⁵ is a C1-C3 linear or branched, partially or completely fluorinated alkylene group optionally containing an ether bond; L is a linking group; and Y° is defined as described above, where the total carbon number of Xⁿ², Xⁿ³, Xⁿ⁴, and Rfⁿ⁵ is 18 or less.

Specific examples of the compound represented by the formula (N⁰) include a perfluorocarboxylic acid (I) represented by the following formula (I), an ω-H perfluorocarboxylic acid (II) represented by the following formula (II), a perfluoroether carboxylic acid (III) represented by the following formula (III), a perfluoroalkyl alkylene carboxylic acid (IV) represented by the following formula (IV), an alkoxyfluorocarboxylic acid (V) represented by the following formula (V), a perfluoroalkyl sulfonic acid (VI) represented by the following formula (VI), an ω-H perfluorosulfonic acid (VII) represented by the following formula (VII), a perfluoroalkyl alkylene sulfonic acid (VIII) represented by the following formula (VIII), an alkyl alkylene carboxylic acid (IX) represented by the following formula (IX), a fluorocarboxylic acid (X) represented by the following formula (X), an alkoxyfluorosulfonic acid (XI) represented by the following formula (XI), a compound (XII) represented by the following formula (XII), and a compound (XIII) represented by the following formula (XIII).

The perfluorocarboxylic acid (I) is represented by the following formula (I):

F(CF₂)ₙ₁COOM (I)

wherein n1 is an integer of 3 to 14; M is H, a metal atom, NR⁷₄, imidazolium optionally having a substituent, pyridinium optionally having a substituent, or phosphonium optionally having a substituent, where R⁷ is H or an organic group.

The ω-H perfluorocarboxylic acid (II) is represented by the following formula (II):

H(CF₂)ₙ₂COOM (II)

wherein n2 is an integer of 4 to 15; and M is defined as described above.

The perfluoroether carboxylic acid (III) is represented by the following formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is defined as described above.

The perfluoroalkyl alkylene carboxylic acid (IV) is represented by the following formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is defined as described above.

The alkoxyfluorocarboxylic acid (V) is represented by the following formula (V):

Rf⁴-O-CY¹Y²CF₂-COOM (V)

wherein Rf⁴ is a C1-C12 linear or branched, partially or completely fluorinated alkyl group optionally containing an ether bond and/or a chlorine atom; Y¹ and Y² are the same as or different from each other and are each H or F; and M is defined as described above.

The perfluoroalkylsulfonic acid (VI) is represented by the following formula (VI):

F(CF₂)ₙ₅SO₃M (VI)

wherein n5 is an integer of 3 to 14; and M is defined as described above.

The ω-H perfluorosulfonic acid (VII) is represented by the following formula (VII):

H(CF₂)ₙ₆SO₃M (VII)

wherein n6 is an integer of 4 to 14; and M is defined as described above.

The perfluoroalkyl alkylene sulfonic acid (VIII) is represented by the following formula (VIII):

Rf⁵(CH₂)ₙ₇SO₃M (VIII)

wherein Rf⁵ is a C1-C13 perfluoroalkyl group; n7 is an integer of 1 to 3; and M is defined as described above.

The alkyl alkylene carboxylic acid (IX) is represented by the following formula (IX):

Rf⁶(CH₂)ₙ₈COOM (IX)

wherein Rf⁶ is a C1-C13 linear or branched, partially or completely fluorinated alkyl group optionally containing an ether bond; n8 is an integer of 1 to 3; and M is defined as described above.

The fluorocarboxylic acid (X) is represented by the following formula (X):

Rf⁷-O-Rf⁸-O-CF₂-COOM (X)

wherein Rf⁷ is a C1-C6 linear or branched, partially or completely fluorinated alkyl group optionally containing an ether bond and/or a chlorine atom; Rf⁸ is a C1-C6 linear or branched, partially or completely fluorinated alkyl group; and M is defined as described above.

The alkoxyfluorosulfonic acid (XI) is represented by the following formula (XI):

Rf⁹-O-CY¹Y²CF₂-SO₃M (XI)

wherein Rf⁹ is a C1-C12 linear or branched, partially or completely fluorinated alkyl group optionally containing an ether bond and optionally containing a chlorine atom; Y¹ and Y² are the same as or different from each other and are each H or F; and M is defined as described above.

The compound (XII) is represented by the following formula (XII): 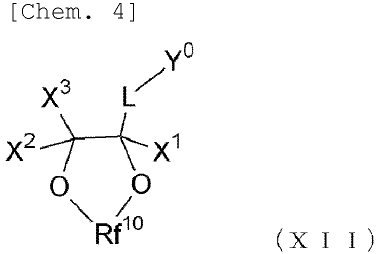 wherein X¹, X², and X³ are the same as or different from each other and are each H, F, or a C1-C6 linear or branched, partially or completely fluorinated alkyl group optionally containing an ether bond; Rf¹⁰ is a C1-C3 perfluoroalkylene group; L is a linking group; and Y° is an anionic group.
Y° may be -COOM, -SO₂M, or -SO₃M, or may be -SO₃M or COOM, wherein M is defined as described above.
L may be a single bond or a C1-C10 partially or completely fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is defined as described above. The compound (XIII) may be CF₂ClO(CF₂CF(CF₃)O)ₙ₉(CF₂O)ₙ₁₀CF₂COONH₄, which is a mixture having an average molecular weight of 750, wherein n9 and n10 are defined as described above.

As described above, examples of the fluorine-containing anion surfactant include carboxylic acid surfactants and sulfonic acid surfactants.

The fluorine-containing surfactant may be a single fluorine-containing surfactant or may be a mixture of two or more fluorine-containing surfactants.

Examples of the fluorine-containing surfactant include compounds represented by any of the following formulas. The fluorine-containing surfactant may be a mixture of any of these compounds:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM,

and

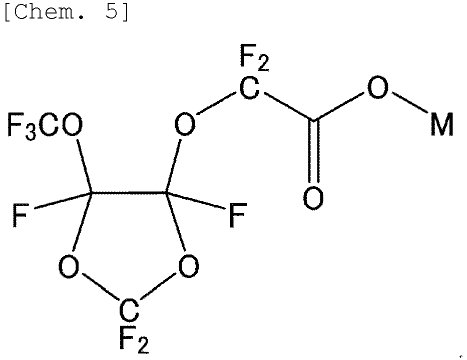

In the formulas, M is H, a metal atom, NR⁷₄, imidazolium optionally having a substituent, pyridinium optionally having a substituent, or phosphonium optionally having a substituent; where R⁷ is defined as described above.

The fluororesin composition of the disclosure may further contain a filler.

The filler may include, for example, at least one selected from the group consisting of glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

Preferred is at least one selected from the group consisting of glass fiber, carbon fiber, carbon black, and bronze.

The filler may be contained in an amount of 0 to 80% by mass of the fluororesin composition, for example.

The fluororesin composition of the disclosure may be produced, for example, by mixing the powder of the fluororesin A, particles of the fluororesin B, and optionally particles of the fluororesin C.

The particles of the fluororesin B to be mixed with the powder of the fluororesin A may be in the form of powder or may be in the form of aqueous dispersion. In order to produce a fluororesin composition having much better tensile properties, the particles of the fluororesin B to be mixed with the powder of the fluororesin A are preferably in the form of aqueous dispersion.

An aqueous dispersion containing the particles of the fluororesin B may be produced by a known method. For example, the aqueous dispersion may be produced by emulsion polymerization of monomers to form a fluororesin B in an aqueous medium in the presence of an anion surfactant and a polymerization initiator. The emulsion polymerization may be accompanied by appropriate use of additives such as a chain transfer agent, a buffer, a pH adjuster, a stabilization aid, and a dispersion stabilizer.

A person skilled in the art would control the composition and physical properties of the fluororesin B as well as the physical properties of the particles by adjusting the conditions for emulsion polymerization.

The aqueous dispersion may contain a hydrocarbon surfactant. The hydrocarbon surfactant is preferably free from a fluorine atom. The hydrocarbon surfactant may be one used in the emulsion polymerization or may be one added after the emulsion polymerization.

The hydrocarbon surfactant to be used may be any of those described in JP 2013-542308 T, JP 2013-542309 T, or JP 2013-542310 T, for example.

The hydrocarbon surfactant has a hydrophilic portion and a hydrophobic portion on the same molecule. These hydrocarbon surfactants may be cationic, nonionic, or anionic.

Common cationic surfactants have a positively charged hydrophilic portion such as an alkylated ammonium halide, e.g., alkylated ammonium bromide, and a hydrophobic portion such as a long-chain fatty acid.

Common anion surfactants have a hydrophilic portion such as a carboxylic acid salt, a sulfonic acid salt, or a sulfuric acid salt, and a hydrophobic portion such as a long-chain hydrocarbon portion, e.g., an alkyl.

Common nonionic surfactants are free from a charged group and have a hydrophilic portion which is a long-chain hydrocarbon. The hydrophilic portion of a nonionic surfactant contains a water-soluble functional group such as the chain of ethylene ether induced by polymerization with ethylene oxide.

The hydrocarbon surfactant is preferably an anion surfactant or a nonionic surfactant.

Examples of the anionic hydrocarbon surfactant include Versatic^{®} 10 available from Resolution Performance Products, LLC and Avanel S series (e.g., S-70, S-74) available from BASF.

The anionic hydrocarbon surfactant may also be an anion surfactant represented by R-L-M¹ wherein R is a C1 or higher linear or branched alkyl group optionally containing a substituent or a C3 or higher cyclic alkyl group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

Specific examples thereof include those represented by CH₃- (CH₂)ₙ-L-M¹ wherein n is an integer of 6 to 17; and L and M¹ are defined as described above.

Also usable is a mixture of those in which R is a C12-C16 alkyl group and L is a sulfuric acid salt or sodium dodecyl sulfate (SDS).

The anionic hydrocarbon surfactant may also be an anion surfactant represented by R⁶(-L-M¹)₂ wherein R⁶ is a C1 or higher linear or branched alkylene group optionally containing a substituent or a C3 or higher cyclic alkylene group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

The anionic hydrocarbon surfactant may also be an anion surfactant represented by R⁷(-L-M¹)₃ wherein R⁷ is a C1 or higher linear or branched alkylidyne group optionally containing a substituent or a C3 or higher cyclic alkylidyne group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, - PO₃⁻, or -COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

An example of the anionic hydrocarbon surfactant is a sulfosuccinate surfactant Lankropol^{®} K8300 available from Akzo Nobel Surface Chemistry LLC.

Examples of sulfosuccinate hydrocarbon surfactants include sodium diisodecyl sulfosuccinate (Emulsogen^{®} SB10, available from Clariant) and sodium diisotridecyl sulfosuccinate (Polirol^{®} TR/LNA, available from Cesapinia Chemicals).

Examples of the anionic hydrocarbon surfactant also include PolyFox^{®} surfactants (e.g., PolyFox^{™} PF-156A and PolyFox^{™} PF-136A) available from Omnova Solutions, Inc.

Examples of the nonionic surfactant include ether nonionic surfactants such as a polyoxyethylene alkyl ether, a polyoxyethylene alkyl phenyl ether, and a polyoxyethylene alkylene alkyl ether; polyoxyethylene derivatives such as an ethylene oxide/propylene oxide block copolymer; ester nonionic surfactants such as a polyoxyethylene fatty acid ester (polyoxyethylene alkyl ester), a sorbitan fatty acid ester (sorbitan alkyl ester), a polyoxyethylene sorbitan fatty acid ester (polyoxyethylene sorbitan alkyl ester), a polyoxyethylene sorbitol fatty acid ester, and a glycerin fatty acid ester (glycerol ester); amine nonionic surfactants such as a polyoxyethylene alkyl amine and an alkyl alkanol amide; and derivatives thereof. One of these may be used alone, or two or more of these may be used in combination.

The nonionic surfactant may be a non-fluorinated nonionic surfactant.

Examples of the polyoxyethylene alkyl ether include polyoxyethylene lauryl ether, polyoxyethylene cetyl ether, polyoxyethylene stearyl ether, polyoxyethylene oleyl ether, and polyoxyethylene behenyl ether.

Examples of the polyoxyethylene alkyl phenyl ether include polyoxyethylene nonyl phenyl ether and polyoxyethylene octyl phenyl ether.

Specific examples of the polyoxyethylene fatty acid ester include polyethylene glycol monolaurate, polyethylene glycol monooleate, and polyethylene glycol monostearate.

Examples of the sorbitan fatty acid ester include sorbitan monolaurate, sorbitan monopalmitate, sorbitan monostearate, and sorbitan monooleate.

Examples of the polyoxyethylene sorbitan fatty acid ester include polyoxyethylene sorbitan monolaurate, polyoxyethylene sorbitan monopalmitate, and polyoxyethylene sorbitan monostearate.

Examples of the glycerin fatty acid ester include glycerol monomyristate, glycerol monostearate, and glycerol monooleate.

Examples of the derivatives include a polyoxyethylene alkyl amine, a polyoxyethylene alkyl phenyl-formaldehyde condensate, and a polyoxyethylene alkyl ether phosphate.

The ether nonionic surfactant and the ester nonionic surfactant may have a HLB value of 10 to 18.

Examples of the nonionic hydrocarbon surfactant include Triton^{®} X series (e.g., X15, X45, X100), Tergitol^{®} 15-S series, Tergitol^{®} TMN series (e.g., TMN-6, TMN-10, TMN-100), and Tergitol^{®} L series available from Dow Chemical Company, Pluronic^{®} R series (31R1, 17R2, 10R5, 25R4 (m: ~22, n: ~23)), T-Det series (A138), and Iconol^{®} TDA series (TDA-6, TDA-9, TDA-10) available from BASF.

In the compound of the nonionic surfactant, the hydrophobic group thereof may be any of an alkyl phenol group, a linear alkyl group, and a branched alkyl group. Still, the compound is preferably one containing no benzene ring, such as a compound having no alkyl phenol group in the structure.

In particular, the nonionic surfactant is preferably one containing an ether bond (-O-), more preferably the aforementioned ether nonionic surfactant, still more preferably a polyoxyethylene alkyl ether. The polyoxyethylene alkyl ether is preferably one including a polyoxyethylene alkyl ether structure containing a C10-C20 alkyl group, more preferably one including a polyoxyethylene alkyl ether structure containing a C10-C15 alkyl group. The alkyl group in the polyoxyethylene alkyl ether structure preferably has a branched structure.

In order to produce a fluororesin composition having much less coloring and much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

The aqueous dispersion obtained by emulsion polymerization or the aqueous dispersion containing a hydrocarbon surfactant may be brought into contact with an anion exchange resin or a mixed bed containing an anion exchange resin and a cation exchange resin, or may be condensed, or may be treated by both of these treatments. This treatment can remove a low molecular weight fluorine-containing compound. The treatment to be used may be a known treatment.

A mixture obtained by mixing the powder of the fluororesin A and the aqueous dispersion containing the particles of the fluororesin B may be coagulated. This coagulation may be performed by a method of coagulating emulsified particles by freezing or mechanical shearing force. Stirring may be performed while a coagulating agent is added, such as a water-soluble organic compound, e.g., methanol or acetone, an inorganic salt, e.g., potassium nitrate or ammonium carbonate, or an inorganic acid such as hydrochloric acid, sulfuric acid, or nitric acid. The coagulation may be continuously performed using, for example, an inline mixer.

The mixture is then dried, whereby a fluororesin composition is obtained. A wet powder obtained by the coagulation may be dried.

The drying may be performed by any method, and may be performed by a known method using, for example, vacuum, high frequency waves, or hot air.

The drying temperature is preferably 50°C or higher, more preferably 70°C or higher, still more preferably 100°C or higher, particularly preferably 150°C or higher, while preferably 300°C or lower, more preferably 250°C or lower.

The particles of the fluororesin C to be mixed with the powder of the fluororesin A (and the particles of the fluororesin B) may be in the form of powder or may be in the form of aqueous dispersion.

The resulting fluororesin composition may be pulverized. The pulverization may be performed by any known method, such as use of an air jet mill, a hammer mill, a force mill, a millstone pulverizer, or a freeze pulverizer.

The resulting fluororesin composition may be granulated. This can provide a fluororesin composition having a high apparent density and excellent handleability.

The granulation may be performed by any known method, such as underwater granulation, hot water granulation, emulsification-dispersion granulation, emulsification hot water granulation, solvent-free granulation, or dry solvent granulation.

The fluororesin composition of the disclosure preferably has a tensile strength at break of 10 MPa or higher, more preferably 13 MPa or higher, still more preferably 15 MPa or higher, further preferably 17 MPa or higher, particularly preferably 20 MPa or higher. The upper limit thereof may be, but is not limited to, 30 MPa, for example.

The tensile strength at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The fluororesin composition of the disclosure preferably has a tensile strain at break of 150% or higher, more preferably 200% or higher, still more preferably 250% or higher, further preferably 300% or higher, even more preferably 360% or higher, particularly preferably 400% or higher. The upper limit thereof may be, but is not limited to, 600%, for example.

The tensile strain at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The fluororesin composition of the disclosure can suitably be used as a molding material. The fluororesin composition may be molded, for example, by compression molding, ram extrusion molding, or isostatic molding, although not limited thereto. Preferred among these is compression molding.

The fluororesin composition of the disclosure is preferably in the form of a powder for compression molding.

The disclosure also provides a molded article obtainable by compression-molding and firing the fluororesin composition of the disclosure.

The molded article of the disclosure has excellent tensile properties while containing a fluororesin having a history of being heated to the melting point thereof or higher.

The compression molding may be performed, for example, by maintaining the fluororesin composition at a pressure of 10 to 50 MPa for 1 minute to 30 hours.

The firing may be performed, for example, by heating the compression-molded article at a temperature of 350°C to 380°C for 0.5 to 50 hours.

The molded article of the disclosure preferably has a tensile strength at break of 10 MPa or higher, more preferably 13 MPa or higher, still more preferably 15 MPa or higher, further preferably 17 MPa or higher, particularly preferably 20 MPa or higher. The upper limit thereof may be, but is not limited to, 30 MPa, for example.

The tensile strength at break is measured in conformity with ASTM D1708.

The molded article of the disclosure preferably has a tensile strain at break of 150% or higher, more preferably 200% or higher, still more preferably 250% or higher, further preferably 300% or higher, even more preferably 360% or higher, particularly preferably 400% or higher. The upper limit thereof may be, but is not limited to, 600%, for example.

The tensile strain at break is measured in conformity with ASTM D1708.

The molded article obtainable from the fluororesin composition of the disclosure can suitably be used for a lining sheet, packing, gasket, diaphragm valve, heat-resistant electric wire, heat-resistant insulating tape for vehicle motors or generators, release sheet, sealant, casing, sleeve, bellows, hose, piston ring, butterfly valve, rectangular tank, wafer carrier, and the like.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### (Melting point)

The melting point was determined as the temperature corresponding to the local minimum on a heat-of-fusion curve obtained by differential scanning calorimetry (DSC) at a temperature-increasing rate of 10°C/min using X-DSC7000 available from Hitachi High-Tech Science Corp. In the case where one melting peak included two or more local minimums, each minimum was defined as a melting point.

In the case where the amount of the fluororesin B was 5% by mass or less, the melting point was determined as the temperature corresponding to the local minimum on a heat-of-fusion curve obtained by differential scanning calorimetry (DSC) after the sample was heated to 300°C, which is lower than the melting point of the fluororesin B, at a temperature-increasing rate of 10°C/min, maintained at 300°C for 10 minutes, and then heated at a temperature-increasing rate of 10°C/min, using X-DSC7000 available from Hitachi High-Tech Science Corp.

### (Composition of monomers in fluororesin)

The composition was determined by ¹⁹F-NMR.

### (Composition of monomers in fluororesin composition)

The composition was determined by calculation based on the composition of materials.

### (Secondary particle size of powder)

The secondary particle size was determined based on the particle size distribution by volume determined in dry measurement using a laser diffraction particle size distribution analyzer (LS13 320) available from Beckman Coulter, Inc. at a vacuum pressure of 20 mH₂O. The average secondary particle size was defined as equivalent to the particle size corresponding to 50% of the cumulative volume in the particle size distribution. The particle size corresponding to 10% was defined as D10 and the particle size corresponding to 90% was defined as D90.

### (Average primary particle size)

The average primary particle size was determined as follows. Specifically, an aqueous dispersion adjusted to have a solid concentration of 0.5% by mass was dropped onto aluminum foil and dried at 150°C for one hour so that water was removed. The residue was then observed using a scanning electron microscope (SEM) and 100 or more particles were randomly selected. The average of the diameters of these particles was defined as the average primary particle size.

### (Aspect ratio)

The average aspect ratio was determined as follows. Specifically, an aqueous dispersion of the fluororesin diluted to have a solid concentration of 0.5% by mass was observed using a scanning electron microscope (SEM) and 100 or more particles randomly selected were imaged. The ratio of the major and minor axes of each particle was then obtained and the average thereof was defined as the average aspect ratio.

The proportion of the particles having an aspect ratio of 2.5 or higher was determined as follows. Specifically, an aqueous dispersion of the fluororesin diluted to have a solid concentration of 0.5% by mass was observed using a scanning electron microscope (SEM) and 100 or more particles randomly selected were imaged. The aspect ratio of each particle was then calculated and the proportion of the particles of interest was defined relative to the total number of the particles selected.

### (Solid concentration of aqueous dispersion)

The solid concentration (P% by mass) in the aqueous dispersion was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The solid concentration was determined by the formula: P = (Z/X) × 100 (% by mass).

### (Amount of nonionic surfactant in aqueous dispersion)

The amount (N% by mass) of the nonionic surfactant contained in the aqueous dispersion relative to the PTFE was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The amount was determined by the formula: N = [(Y-Z)/Z] × 100 (% by mass).

### (Apparent density)

The apparent density was determined in conformity with JIS K 6891.

### (Standard specific gravity (SSG))

The SSG was determined by the immersion method in conformity with ASTM D792 using a sample molded in conformity with ASTM D4895-89.

### (MFR)

The MFR was determined in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE).

### (Tensile test)

The tensile test was performed as follows. Specifically, 35 g of powder was put into a ϕ100 mm mold and compression-molded at a pressure of 30 MPa for one minute. The temperature was increased from room temperature to 300°C over three hours, then increased from 300°C to 370°C over four hours, then maintained at 370°C for 12 hours, then decreased to 300°C over five hours, and then decreased to room temperature over one hour, whereby the compression-molded article was fired into a molded article. The molded article was then cut into a dumbbell, which was subjected to the tensile test in conformity with ASTM D1708. Thereby, the tensile strength at break and the tensile strain at break were measured.

### (Melt flowability of fluororesin composition)

A fluororesin composition (powder) was compression-molded and fired under the same conditions as in the above tensile test. In the case where the thickness after firing was smaller than the thickness before firing by 20% or more, the fluororesin composition was determined as being melt-flowable. In the case where the thickness after firing was smaller than the thickness before firing by less than 20% or the thickness after firing was greater than the thickness before firing, the fluororesin composition was determined as being non-melt-flowable.

### (Amount of low molecular weight fluorine-containing compound)

First, 1 g of a fluororesin composition (powder) was weighed and combined with 10 mL of a 0.3% solution (A) of ammonium hydroxide in methanol, which was prepared from ammonia water and methanol. A sample bottle was placed in an ultrasonic cleaner controlled to a temperature of 60°C and sonicated for two hours, whereby an extract was obtained. The fluorine-containing compound in the extract was analyzed using a liquid chromatograph-mass spectrometer (1290 Infinity II LC system and 6530 time-of-flight mass spectrometer available from Agilent). The specifications of the measurement devices and the measurement conditions are shown in Table 1. Based on the exact masses, the peaks of compounds identified as fluorine compounds having a molecular weight of 800 or lower were extracted, so that an extracted chromatogram was obtained. Four levels of aqueous solutions were prepared using a perfluorooctanoic acid-containing aqueous solution having a known concentration. The aqueous solutions of the respective levels were analyzed and the relationship of the levels and the areas corresponding to the levels were plotted, drawing a calibration curve. Using the extracted chromatogram and the calibration curve, the amount, as an equivalent to perfluorooctanoic acid, of the fluorine-containing compound having a molecular weight of 800 or lower in the extract was calculated.

**[Table 1]**

| LC section | | | | |
|---|---|---|---|---|
| | Device | 1290 Infinity II, Agilent | | |
| | Column | EclipsePulsC18 RRHD 1.8 µm 2.1 × 50 mm, Agilent | | |
| | Mobile phase | A 20 mM CH₃COONH₄/H₂O | | |
| | | B CH₃CN | | |
| | | | 0 to 1 min | A:B = 90:10 |
| | | | 1 to 6 min | A:B = 90:10 to 5:95 Linear gradient |
| | | | 6 to 12 min | A:B = 5:95 |
| | Flow rate | 0.3 ml | | |
| | Column temp. | 40°C | | |
| | Amount of sample | 5 µL | | |

| MS section | | | | |
|---|---|---|---|---|
| | Device | 6530 LC/Q-TOF, Agilent | | |
| | Measurement mode | Electrospray ionization | | |
| | Ionization mode | Negative | | |

### Synthesis Example 1 (synthesis of perfluoroether carboxylic acid ammonium salt A)

A 1-L autoclave was purged with nitrogen and charged with 16.5 g of dehydrated tetramethylurea and 220 g of diethylene glycol dimethyl ether, followed by cooling. Next, 38.5 g of carbonyl fluoride and then 100 g of hexafluoropropylene oxide were fed thereto, followed by stirring. Then, 38.5 g of carbonyl fluoride and 100 g of hexafluoropropylene oxide were again added thereto. The same amounts of carbonyl fluoride and hexafluoropropylene oxide were fed thereto. After the reaction was completed, a reaction liquid mixture was collected. The mixture was separated and the lower layer reaction product was obtained.

A 6-L autoclave was charged with 1000 mL of tetraglyme and CsF (75 g) and purged with nitrogen. The autoclave was cooled and charged with 2100 g of the reaction product obtained above. Hexafluoropropylene oxide was then introduced into the autoclave, so that the reaction was initiated. Finally, 1510 g of hexafluoropropylene oxide was fed thereto. The contents were collected and separated using a separating funnel into an upper layer and a lower layer. The upper layer weighed 1320 g and the lower layer weighed 3290 g. The lower layer was rectified for isolation.

Next, 1000 g of the isolated target was combined with 1000 g of pure water and hydrolyzed. The product was then separated using a separating funnel and the organic layer (lower layer) was collected. The collected solution was washed with sulfuric acid water. The resulting solution was further simply distilled for purification. The resulting purified compound was mixed with 76 g of a 28% by mass ammonia aqueous solution and 600 g of pure water to prepare an aqueous solution. To this aqueous solution was added dropwise 500 g of the product obtained by the above simple distillation. The dropwise addition was followed by addition of a 28% by mass ammonia aqueous solution, so that the pH was adjusted to 7. The product was freeze-dried, whereby a perfluoroether carboxylic acid ammonium salt A was obtained.

### Production Example 1 (production of fluororesin powder A-1)

A coarse powder of homo-PTFE obtained by suspension polymerization of a TFE monomer alone was pulverized using a pulverizer to provide a PTFE molding powder (standard specific gravity (SSG): 2.159, melting point: 345.0°C). Then, 35 g of this molding powder was compression-molded in a ϕ100-mm mold at 30 MPa for one minute and fired at 370°C for three hours. Thereby, a molded article was obtained. The resulting molded article was cut and pulverized using a pulverizer, whereby a fluororesin powder A-1 was obtained. The fluororesin powder A-1 had a melting point of 328°C, an average secondary particle size of 23 um, a D10 of 8 um, a D90 of 48 um, and an apparent density of 0.64 g/ml.

### Production Example 2 (production of fluororesin powder A-2)

A molded article obtained as in Production Example 1 was cut and pulverized using a pulverizer, whereby a fluororesin powder A-2 was obtained. The fluororesin powder A-2 had a melting point of 328°C, an average secondary particle size of 37 um, a D10 of 7 um, a D90 of 87 um, and an apparent density of 0.53 g/ml.

### Production Example 3 (production of PFA aqueous dispersion B-1 containing PFA particles)

In a 6-L capacity stainless steel autoclave equipped with a stirring blade, the perfluoroether carboxylic acid ammonium salt A was used to perform a known emulsion polymerization technique, whereby a PFA aqueous dispersion B-1 was obtained containing PFA particles including a TFE unit and a perfluoro(propyl vinyl ether) (PPVE) unit.

The resulting PFA aqueous dispersion B-1 had a solid concentration of 14% by mass, an average primary particle size of 291 nm, a MFR of 22 g/10 min, a melting point of 314°C, and a PPVE unit content of 1.4 mol%.

### Production Example 4 (production of PFA powder B-2)

In a 6-L capacity stainless steel autoclave equipped with a stirring blade, the perfluoroether carboxylic acid ammonium salt A was used to perform a known emulsion polymerization technique, whereby a PFA aqueous dispersion was obtained containing PFA particles including a TFE unit and a perfluoro(propyl vinyl ether) (PPVE) unit. The resulting PFA aqueous dispersion was subjected to coagulation, whereby a PFA powder B-2 was obtained. The resulting PFA powder B-2 had an average secondary particle size of 11 um, a MFR of 27 g/10 min, a melting point of 298°C, and a PPVE unit content of 2.1 mol%.

### Production Example 5 (production of PFA powder B-3)

A PFA aqueous dispersion obtained as in Production Example 3 was subjected to coagulation, whereby a PFA powder B-3 was obtained. The resulting PFA powder B-3 had an average secondary particle size of 1.5 um, a MFR of 28 g/10 min, a melting point of 314°C, and a PPVE unit content of 1.4 mol%.

### Production Example 6 (production of FEP powder B-4)

In a 6-L capacity stainless steel autoclave equipped with a stirring blade, ammonium persulfate was used to perform a known emulsion polymerization technique, whereby a FEP aqueous dispersion was obtained containing FEP particles including a TFE unit, a hexafluoropropylene (HFP) unit, and a perfluoro(propyl vinyl ether) unit. The resulting FEP aqueous dispersion was subjected to coagulation with nitric acid, dehydration by compression, and drying at 170°C for four hours, whereby a FEP powder B-4 was obtained. The resulting FEP powder had an average secondary particle size of 19 um, a MFR of 24 g/10 min, and a melting point of 261°C, with the sum of the HFP unit content and the PPVE unit content being 7.6 mol%.

### Production Example 7 (production of FEP powder B-5)

Using the method disclosed in Example 1 of WO 2001/036504 A1 (i.e., by adjusting the amounts of a TFE monomer, a HFP monomer, di-(w-hydrodecafluoroheptanoyl) peroxide (DHP), and methanol), a FEP powder B-5 was obtained containing a TFE unit and a hexafluoropropylene (HFP) unit. The resulting FEP powder had an average secondary particle size of 50 um, a MFR of 1 g/10 min, and a melting point of 302°C, with the sum of the HFP unit content and the PPVE unit content being 8.4 mol%.

### Production Example 8 (production of fluororesin aqueous dispersion C-1)

In a 6-L capacity stainless steel autoclave equipped with a stirring blade, the perfluoroether carboxylic acid ammonium salt A was used to perform a known emulsion polymerization technique, whereby a fluororesin aqueous dispersion C-a was obtained containing homo-PTFE particles consisting only of a TFE monomer.

The fluororesin aqueous dispersion C-a was combined with a nonionic surfactant TDS-80 (available from DKS Co., Ltd.), whereby a dispersion was prepared having a nonionic surfactant concentration of 10 parts by mass relative to 100 parts by mass of PTFE. Subsequently, a 20-mm-diameter column was charged with 250 mL of OH anion exchange resin (trade name: Amberjet AMJ4002 available from Rohm and Haas) and the dispersion was passed therethrough at SV = 1. The aqueous dispersion obtained after the permeation was combined with a nonionic surfactant TDS-80 in an amount of 16 parts by mass of a nonionic surfactant TDS-80 relative to 100 parts by mass of PTFE. The mixture was maintained at 65°C for three hours and thereby separated into a supernatant layer and a condensed layer. The condensed layer was collected, whereby a fluororesin aqueous dispersion C-b was obtained.

The fluororesin aqueous dispersion C-b was combined with a nonionic surfactant TDS-80 in an amount of 6.0% by mass relative to PTFE. The mixture was further combined with deionized water and ammonia water, whereby a fluororesin aqueous dispersion C-1 was obtained. The solid concentration was 60.2% by mass and the amount of the nonionic surfactant contained was 6.0% by mass relative to PTFE.

### Production Example 9 (production of fluororesin powder C-2)

A coarse powder of homo-PTFE obtained by suspension polymerization of a TFE monomer alone was pulverized using a pulverizer, whereby a fluororesin powder C-2 was obtained. The fluororesin powder C-2 had an apparent density of 0.34 g/ml, an average secondary particle size of 24 um, a D90 of 55 um, a standard specific gravity (SSG) of 2.163, and a melting point of 345.0°C.

### Production Example 10 (production of fluororesin powder C-3)

A coarse powder of modified PTFE obtained by suspension polymerization of TFE and perfluoropropyl vinyl ether (PPVE) was pulverized using a pulverizer, whereby a fluororesin powder C-3 was obtained. The fluororesin powder C-3 had an apparent density of 0.33 g/ml, an average secondary particle size of 28 um, a D90 of 77 um, a standard specific gravity (SSG) of 2.168, a melting point of 341.5°C, and a PPVE unit content of 0.09% by mass.

### Example 1

First, 95 g of the fluororesin powder A-1 and 36 g of the PFA aqueous dispersion B-1 were shake-mixed in a flask. The mixture was combined with methanol for coagulation. The product was filtered and the residue was washed with water and methanol, whereby wet powder was collected.

The resulting wet powder was dried in an electric furnace at 150°C for 15 hours, so that water was removed.

The dry powder was pulverized using Wonder Crusher WC-3 at a rotational frequency of 2900 rpm for 60 seconds, whereby a powder mixture (fluororesin composition) was obtained. The powder mixture contained the TFE unit and the PPVE unit in amounts of respectively 99.82% by mass and 0.18% by mass of all polymerized units. The powder mixture had melting points of 314°C and 329°C, a tensile strength at break of 12 MPa, a tensile strain at break of 253%, an average secondary particle size of 25 um, a D10 of 9 um, and a D90 of 51 um.

The molded article after firing had a greater thickness than before firing and maintained its shape. Accordingly, the powder mixture was determined as being non-melt-flowable.

### Example 2

A powder mixture was obtained as in Example 1 except that the fluororesin powder A-1 was changed from 95 g to 90 g and the PFA aqueous dispersion B-1 was changed to 71 g. The powder mixture contained the TFE unit and the PPVE unit in amounts of respectively 99.64% by mass and 0.36% by mass of all polymerized units. The powder mixture had melting points of 315°C and 328°C, a tensile strength at break of 15 MPa, a tensile strain at break of 353%, an average secondary particle size of 25 um, a D10 of 9 um, and a D90 of 52 um, and contained 1 ppm by mass or lower of a low molecular weight fluorine-containing compound (fluorine-containing surfactant containing an anionic portion having a molecular weight of 800 or lower).

The molded article after firing had a greater thickness than before firing and maintained its shape. Accordingly, the powder mixture was determined as being non-melt-flowable.

### Comparative Example 1

Using 35 g of the fluororesin powder A-1 (melting point 328°C), the tensile test was performed as in Example 1 to find that the tensile strength at break was 9 MPa, the tensile strain at break was 145%, the average secondary particle size was 23 um, the D10 was 8 um, and the D90 was 48 um.

### Example 3

A powder mixture was obtained as in Example 1 except that the fluororesin powder A-1 was changed to 50 g, the PFA aqueous dispersion B-1 was changed to 14 g, and 80 g of the fluororesin aqueous dispersion C-1 was used. The powder mixture contained the TFE unit and the PPVE unit in amounts of respectively 99.928% by mass and 0.072% by mass of all polymerized units. The powder mixture had melting points of 312°C, 329°C, and 337°C, a tensile strength at break of 19 MPa, and a tensile strain at break of 377%.

The molded article after firing had a greater thickness than before firing and maintained its shape. Accordingly, the powder mixture was determined as being non-melt-flowable.

### Example 4

A powder mixture was obtained as in Example 1 except that the fluororesin powder A-1 was changed to 50 g, the PFA aqueous dispersion B-1 was changed to 36 g, and 75 g of the fluororesin aqueous dispersion C-1 was used. The powder mixture contained the TFE unit and the PPVE unit in amounts of respectively 99.82% by mass and 0.18% by mass of all polymerized units. The powder mixture had melting points of 312°C, 329°C, and 337°C, a tensile strength at break of 25 MPa, and a tensile strain at break of 531%.

The molded article after firing had a greater thickness than before firing and maintained its shape. Accordingly, the powder mixture was determined as being non-melt-flowable.

### Comparative Example 2

A powder mixture was obtained as in Example 1 except that the fluororesin powder A-1 was changed to 50 g and 83 g of the fluororesin aqueous dispersion C-1 was used. The powder mixture had melting points of 329°C and 337°C, a tensile strength at break of 12 MPa, and a tensile strain at break of 278%.

### Example 5

Using Wonder Crusher WC-3, 75 g of the fluororesin powder A-1 and 25 g of the PFA powder B-2 were mixed at a rotational frequency of 6900 rpm for 60 seconds, whereby a powder mixture (fluororesin composition) was obtained. The powder mixture contained the TFE unit and the PPVE unit in amounts of respectively 99.1% by mass and 0.9% by mass of all polymerized units. The powder mixture had melting points of 298°C and 329°C, a tensile strength at break of 16 MPa, a tensile strain at break of 297%, an average secondary particle size of 22 um, a D10 of 4 um, and a D90 of 64 um.

The molded article after firing had a greater thickness than before firing and maintained its shape. Accordingly, the powder mixture was determined as being non-melt-flowable.

### Example 6

A powder mixture was obtained as in Example 5 except that the fluororesin powder A-1 was changed to 50 g as well as 3 g of the FEP powder B-4 and 47 g of the fluororesin powder C-2 were used. The powder mixture contained the TFE unit and the HFP unit in amounts of respectively 99.64% by mass and 0.36% by mass of all polymerized units. The powder mixture had melting points of 263°C, 329°C, and 345°C, a tensile strength at break of 22 MPa, a tensile strain at break of 404%, an average secondary particle size of 27 um, a D10 of 8 um, and a D90 of 64 um.

The molded article after firing had a greater thickness than before firing and maintained its shape. Accordingly, the powder mixture was determined as being non-melt-flowable.

### Example 7

First, 90 g of the fluororesin powder A-1 and 36 g of the PFA aqueous dispersion B-1 were shake-mixed in a flask. The mixture was combined with methanol for coagulation. The product was filtered and the residue was washed with water and methanol, whereby wet powder was collected.

The resulting wet powder was dried in an electric furnace at 150°C for 15 hours, so that water was removed.

The dry powder and the fluororesin powder C-3 were mixed and the mixture was pulverized using Wonder Crusher WC-3 at a rotational frequency of 2900 rpm for 60 seconds, whereby a powder mixture (fluororesin composition) was obtained. The powder mixture contained the TFE unit and the PPVE unit in amounts of respectively 99.82% by mass and 0.18% by mass of all polymerized units. The powder mixture had melting points of 314°C, 329°C, and 342°C, a tensile strength at break of 13 MPa, a tensile strain at break of 344%, an average secondary particle size of 26 um, a D10 of 9 um, and a D90 of 61 um.

The molded article after firing had a greater thickness than before firing and maintained its shape. Accordingly, the powder mixture was determined as being non-melt-flowable.

### Example 8

A powder mixture was obtained as in Example 5 except that the fluororesin powder A-1 was changed to 50 g as well as 8 g of the FEP powder B-5 and 42 g of the fluororesin powder C-2 were used. The powder mixture contained the TFE unit and the HFP unit in amounts of respectively 99.04% by mass and 0.96% by mass of all polymerized units. The powder mixture had melting points of 263°C, 329°C, and 345°C, a tensile strength at break of 21 MPa, a tensile strain at break of 342%, an average secondary particle size of 28 um, a D10 of 9 um, and a D90 of 62 um.

The molded article after firing had a greater thickness than before firing and maintained its shape. Accordingly, the powder mixture was determined as being non-melt-flowable.

### Example 9

A powder mixture was obtained as in Example 5 except that 90 g of the fluororesin powder A-2 and 10 g of the PFA powder B-3 were used. The powder mixture contained the TFE unit and the PPVE unit in amounts of respectively 99.64% by mass and 0.36% by mass of all polymerized units. The powder mixture had melting points of 314°C and 329°C, a tensile strength at break of 12 MPa, and a tensile strain at break of 275%.

The molded article after firing had a greater thickness than before firing and maintained its shape. Accordingly, the powder mixture was determined as being non-melt-flowable.

### Example 10

A powder mixture was obtained as in Example 5 except that 50 g of the fluororesin powder A-1, 40 g of the fluororesin powder A-2, and 10 g of the PFA powder B-3 were used. The powder mixture contained the TFE unit and the PPVE unit in amounts of respectively 99.64% by mass and 0.36% by mass of all polymerized units. The powder mixture had melting points of 314°C, 329°C, and 342°C, a tensile strength at break of 23 MPa, and a tensile strain at break of 363%.

The molded article after firing had a greater thickness than before firing and maintained its shape. Accordingly, the powder mixture was determined as being non-melt-flowable.

## Claims

1. A non-melt-flowable fluororesin composition comprising:
a non-melt-flowable fluororesin A having a history of being heated to a melting point thereof or higher; and
a melt-flowable fluororesin B.

2. The fluororesin composition according to claim 1,
wherein the fluororesin A is polytetrafluoroethylene.

3. The fluororesin composition according to claim 1 or 2,
wherein the fluororesin B has a MFR of 0.25 g/10 min or higher.

4. The fluororesin composition according to any one of claims 1 to 3,
wherein the fluororesin B is a fluororesin having a melting point of 320°C or lower.

5. The fluororesin composition according to any one of claims 1 to 4, further comprising a non-melt-flowable fluororesin C including a portion having no history of being heated to a melting point thereof or higher.

6. The fluororesin composition according to claim 5,
wherein the fluororesin composition has at least one melting point within a temperature range lower than 333°C and at least one melting point within a temperature range from 333°C to 360°C.

7. The fluororesin composition according to any one of claims 1 to 6,
wherein the fluororesin composition contains a tetrafluoroethylene unit and a modifying monomer unit based on a modifying monomer copolymerizable with tetrafluoroethylene, the modifying monomer unit being present in an amount of 1.0% by mass or less of all polymerized units.

8. The fluororesin composition according to any one of claims 1 to 7,
wherein the fluororesin composition has an average secondary particle size of 5 to 700 um.

9. The fluororesin composition according to any one of claims 1 to 8,
wherein a low molecular weight fluorine-containing compound is contained in an amount of 1 ppm by mass or less of the fluororesin composition.

10. The fluororesin composition according to any one of claims 1 to 9, which is in the form of powder.

11. The fluororesin composition according to any one of claims 1 to 10, which is in the form of a powder for compression molding.

12. The fluororesin composition according to any one of claims 1 to 11,
wherein the fluororesin composition has a tensile strength at break of 10 MPa or higher.

13. The fluororesin composition according to any one of claim 1 to 12,
wherein the fluororesin composition has a tensile strain at break of 150% or higher.

14. A molded article obtainable by compression-molding and firing the fluororesin composition according to any one of claims 1 to 13.
